# EUROPEAN PATENT APPLICATION

(11) **EP 4 435 186 A1**
(43) Date of publication of application: **25.09.2024**
(21) Application number: 22895354.3
(22) Date of filing: 25.10.2022
(51) Int. Cl.: E02F 3/43, E02F 9/26

(54) **WORK SUPPORT SYSTEM, CONTROL METHOD FOR WORK SUPPORT SYSTEM, AND CONTROL PROGRAM FOR WORK SUPPORT SYSTEM**

(30) Priority: 19.11.2021 JP 2021188291
(71) Applicant: Nippon Seiki Co., Ltd., Nagaoka-shi, Niigata 940-8580 (JP)
(72) Inventor: SUZUKI, Masamichi, Nagaoka (JP)
(74) Representative: Carpmaels & Ransford LLP
(86) International application number: PCT/JP2022/039647
(87) International publication number: WO 2023/090070

(57) **Abstract**

The present invention makes it possible to perform construction by effectively using general-purpose products used at a work site. A work machine 2 comprises: detection devices 11A, 11B, 11C that acquire attitude information about movable parts 6, 7, 8 by means of sensors and output the same; a body device 12 that acquires the attitude information from the detection devices 11A, 11B, 11C so as to transmit the same by means of data communication using wireless communication, and that receives and displays support information for supporting operation by an operator by means of data communication using wireless communication; and a light receiver 13 that is held by the movable part 7 (or 6), receives laser light LA, and notifies the operator. As a result of instruction by the operator, a portable information terminal device 4 detects a measurement reference location 8B of the movable part 8 by using the attitude information with the light reception position of the laser light LA on the light receiver 13 as a reference, sets support information, and updates the support information by using the attitude information.

## Description

### TECHNICAL FIELD

The present invention relates to a work support system, a control method for a work support system, and a control program for a work support system, and is applicable to, for example, a work machine such as a hydraulic shovel.

### BACKGROUND ART

Conventionally, work machines in which a machine guidance function is incorporated (work machines to which a work support system is applied, i.e., the so-called ICT construction machine) have been provided.

The machine guidance is a technology of supporting an operation of a work machine by using a measurement technology, such as total station (TS) or a global navigation satellite system (GNSS). With the use of the machine guidance, it is possible to improve the work efficiency, safety, and work accuracy by appropriately supporting the operation of an operator.

In such an ICT construction machine, a sensor is arranged on a movable part of the work machine, and information for supporting the operation of an operator (hereinafter referred to as support information as appropriate) is prepared on the basis of a result of detection by the sensor.

Patent Document 1 discloses a configuration in which a distal end position of a bucket provided on a hydraulic shovel is detected by using laser light from a laser beacon installed on the ground.

Further, conventionally, at a work site where a hydraulic shovel is used, laser light emitted from the so-called laser level is received by a light receiver held on a scale to check on the depth of an excavation place, unevenness of a leveled ground surface, and the like.

### PRIOR ART DOCUMENT

### PATENT DOCUMENT

Patent Document 1: JP 2002-340556 A

### SUMMARY OF THE INVENTION

### PROBLEMS TO BE SOLVED BY THE INVENTION

Incidentally, it is considered that a work support system can be easily introduced by configuring the work support system by effectively using general-purpose products used at work sites.

The present invention has been conceived in view of the above points, and it is an object of the present invention to propose a work support system, a control method for a work support system, and a control program for a work support system which can be configured by effectively using general-purpose products used at work sites.

### SOLUTION TO PROBLEM

In order to solve such a problem, an invention according to claim 1 provides a work support system, which supports an operation of an operator who operates a work machine, and includes a laser beacon which emits laser light to perform scanning, and a portable information terminal device, in which the work machine includes: a detection device which is held on a movable part of the work machine, and acquires attitude information on the movable part by means of a sensor and outputs the attitude information; a body device which acquires the attitude information from the detection device and transmits the attitude information by data communication via wireless communication, and also receives and displays support information for supporting the operation of the operator by data communication via the wireless communication; and a light receiver which is held on the movable part, and receives the laser light and notifies the operator, and the portable information terminal device: detects, in response to an instruction from the operator, a measurement reference location of the movable part from the attitude information with reference to a light reception position of the laser light obtained by the light receiver to set the support information; and updates the support information on the basis of the attitude information.

According to the configuration of claim 1, in response to the instruction from the operator, by detecting the measurement reference location of the movable part from the attitude information with reference to the light reception position of the laser light to set the support information, and updating the support information on the basis of the attitude information, it is possible to effectively use a general-purpose laser beacon and a general-purpose light receiver that are used at a work site to check on the depth of an excavation place, unevenness of a leveled ground surface, and the like, and perform the work. Consequently, a work support system can be configured by effectively using general-purpose products used at work sites.

An invention of claim 2 is configured such that, in the configuration of claim 1, the work machine is a hydraulic shovel, and the measurement reference location is a distal end of a bucket of the hydraulic shovel.

According to the configuration of claim 2, with a more specific configuration, the work support system can be configured by effectively using general-purpose products used at work sites.

An invention of claim 3 is configured such that, in the configuration of claim 2, the portable information terminal device sets, on the basis of the attitude information, an intermediate position between a position at which the distal end of the bucket becomes most distant from a main body and a position at which the distal end of the bucket becomes closest to the main body as a laser light receiving condition, and notifies the operator of the laser light receiving condition.

According to the configuration of claim 3, the intermediate position between the position at which the distal end of the bucket becomes most distant from the main body and the position at which the distal end of the bucket becomes closest to the main body is set as the laser light receiving condition, and the operator is notified of this. By doing so, after making the setting to reduce a detection error of the bucket distal end, the measurement reference location can be detected to set the support information, and the accuracy of the support information can thereby be improved.

An invention of claim 4 is configured such that, in the configuration of any one of claim 1, claim 2, and claim 3, the light receiver is provided with a signal conversion device which converts a notification to the operator such that the notification is recognizable by the operator in a cockpit of the work machine.

According to the configuration of claim 4, even in a case where the operator in the cockpit is unable to recognize reception of the laser light by the light receiver, the operator can be made to recognize the reception by way of the conversion by the signal conversion device.

An invention according to claim 5 provides a control method for a work support system for supporting an operation of an operator who operates a work machine, in which the work support system includes: a laser beacon which emits laser light to perform scanning; and a portable information terminal device, and the work machine includes: a detection device which is held on a movable part of the work machine, and acquires attitude information on the movable part by means of a sensor and outputs the attitude information; a body device which acquires the attitude information from the detection device and transmits the attitude information by data communication via wireless communication, and also receives and displays support information for supporting the operation of the operator by data communication via the wireless communication; and a light receiver which is held on the movable part, and receives the laser light and notifies the operator, and the control method includes, in the portable information terminal device: detecting, in response to an instruction from the operator, a measurement reference location of the movable part from the attitude information with reference to a light reception position of the laser light obtained by the light receiver and setting the support information; and updating the support information on the basis of the attitude information.

According to the configuration of claim 5, in response to the instruction from the operator, by detecting the measurement reference location of the movable part from the attitude information with reference to the light reception position of the laser light to set the support information, and updating the support information on the basis of the attitude information, it is possible to effectively use a general-purpose laser beacon and a general-purpose light receiver that are used at a work site to check on the depth of an excavation place, unevenness of a leveled ground surface, and the like, and perform the work. Consequently, the work support system can be configured by effectively using general-purpose products used at work sites.

An invention according to claim 6 provides a control program for a work support system for causing a predetermined processing procedure to be executed by execution of the control program by an arithmetic processing circuit, in which the work support system includes: a laser beacon which emits laser light to perform scanning; and a portable information terminal device, and the work machine includes: a detection device which is held on a movable part of the work machine, and acquires attitude information on the movable part by means of a sensor and outputs the attitude information; a body device which acquires the attitude information from the detection device and transmits the attitude information by data communication via wireless communication, and also receives and displays support information for supporting the operation of the operator by data communication via the wireless communication; and a light receiver which is held on the movable part, and receives the laser light and notifies the operator, and the predetermined processing procedure includes: a setting step of setting the support information by detecting, in response to an instruction from the operator, a measurement reference location of the movable part from the attitude information with reference to a light reception position of the laser light obtained by the light receiver; and an updating step of updating the support information on the basis of the attitude information.

According to the configuration of claim 6, in response to the instruction from the operator, by detecting the measurement reference location of the movable part from the attitude information with reference to the light reception position of the laser light to set the support information, and updating the support information on the basis of the attitude information, it is possible to effectively use a general-purpose laser beacon and a general-purpose light receiver that are used at a work site to check on the depth of an excavation place, unevenness of a leveled ground surface, and the like, and perform the work. Consequently, the work support system can be configured by effectively using general-purpose products used at work sites.

### EFFECT OF THE INVENTION

According to the present invention, general-purpose products used at a work site where this type of work machine is used can be effectively utilized to achieve the configuration.

### BRIEF DESCRIPTION OF THE DRAWINGS

Fig. 1 is a diagram illustrating a work support system according to a first embodiment of the present invention.
Fig. 2 is a block diagram of the work support system of Fig. 1.
Fig. 3 is a plan view of a light receiver of the work support system of Fig. 1.
Fig. 4 is a diagram for use to describe setting processing.
Fig. 5 is a diagram for use to describe a laser light receiving condition.
Fig. 6 is a diagram for use to describe a continuation of Fig. 5.
Fig. 7 is a flowchart for use to describe an operation of the work support system of Fig. 1.
Fig. 8 is a flowchart of a continuation of Fig. 7.
Fig. 9 is a plan view illustrating a display screen of a portable information terminal device.
Fig. 10 is a plan view illustrating a display screen of a continuation of Fig. 9.
Fig. 11 is a plan view illustrating a display screen of a continuation of Fig. 10.
Fig. 12 is a plan view illustrating a display screen of a continuation of Fig. 11.

### MODE FOR CARRYING OUT THE INVENTION

### [First Embodiment]

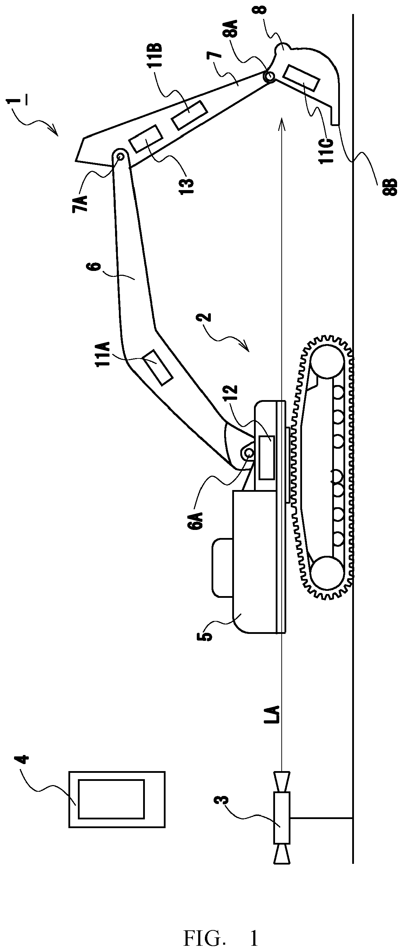

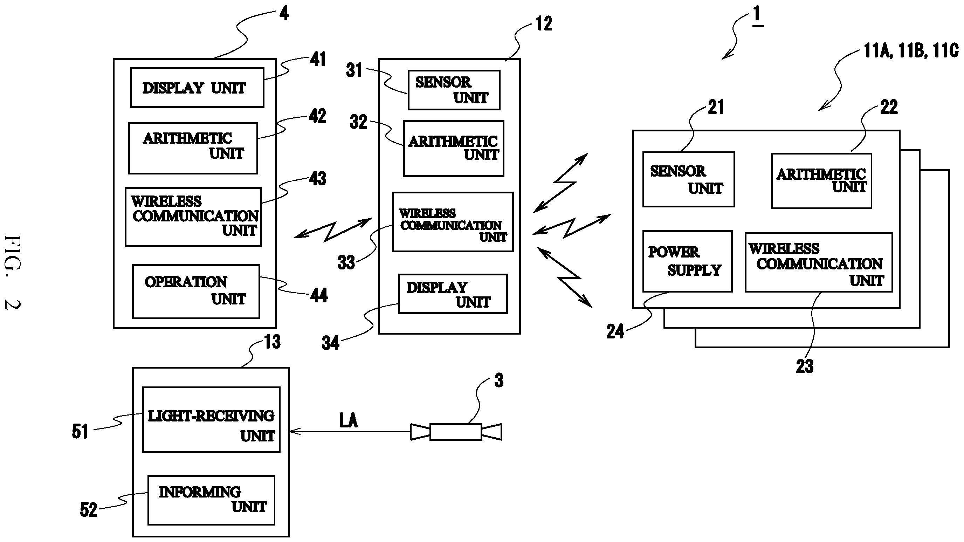

Fig. 1 is a diagram illustrating a work support system 1 according to a first embodiment of the present invention, and Fig. 2 is a block diagram.

The work support system 1 is provided with a hydraulic shovel 2, which is a work machine, a laser beacon 3, and a portable information terminal device 4, and supports the operation of an operator who operates the hydraulic shovel 2 by the function of machine guidance.

Here, the laser beacon 3 is the so-called laser level, and emits laser light LA that is parallel to a work target surface. The laser beacon 3 performs scanning with the laser light LA within a plane parallel to the work target surface (i.e., within a plane perpendicular to a gravity direction in the present embodiment). Consequently, at a work site, the depth of an excavation place, unevenness of a leveled ground surface, and the like, can be checked with the laser light LA used as a reference even at a place separated from the laser beacon 3.

In the hydraulic shovel 2, a main body 5 is formed such that the hydraulic shovel 2 is self-propelled on a caterpillar track, and a boom 6 is rotatably provided on the main body 5 by a boom pin 6A. Further, in the hydraulic shovel 2, an arm 7 is rotatably provided at a distal end of the boom 6 by an arm pin 7A, and further, a bucket 8 is rotatably provided at a distal end of the arm 7 by a bucket pin 8A. The work support system 1 is not limitedly applied to a hydraulic shovel, but can be widely applied to various work machines used for civil engineering and construction works, such as a work machine used for ground improvement.

The hydraulic shovel 2 is provided with detection devices 11A, 11B, and 11C, a body device 12, and a light receiver 13. In the hydraulic shovel 2, the detection devices 11A, 11B, and 11C are arranged on the boom 6, the arm 7, and the bucket 8, which are movable parts, respectively. Note that the detection devices 11A, 11B, and 11C may be provided on only some of the boom 6, the arm 7, and the bucket 8, and can be provided on various parts as necessary.

Each of the detection devices 11A, 11B, and 11C is provided with a sensor unit 21, an arithmetic unit 22, a wireless communication unit 23, and a power supply 24, is held on the movable part of the work machine, and acquires attitude information on the movable part by means of a sensor and outputs the attitude information.

The sensor unit 21 is provided with the sensor, acquires three dimensional acceleration information and angular velocity information by the sensor, and outputs the acquired information.

The arithmetic unit 22 processes a result of measurement by the sensor, which is output from the sensor unit 21 by means of a built-in arithmetic processing circuit, and acquires the attitude information indicating an attitude of the corresponding movable part.

Here, in the present embodiment, an inertial measurement unit (IMU) sensor is applied as the sensor of the sensor unit 21. However, the sensor applied is not limited to the IMU sensor, and a sensor other than a three-axis sensor may be applied, in other words, various configurations capable of detecting the attitude information can be widely applied. Also, the sensor is not limited to a configuration capable of directly acquiring information for detecting the attitude of the movable part. That is, for example, configurations capable of indirectly detecting the attitude of the movable part, such as a ranging sensor for measuring a distance to a ground surface, can be widely applied.

The wireless communication unit 23 transmits the attitude information acquired by the arithmetic unit 22 to the body device 12 by data communication via wireless communication. While Bluetooth (registered trademark) is applied to the wireless communication by the wireless communication unit 23, wireless communications capable of performing data communication can be widely applied.

The power supply 24 outputs a power supply for operating the detection devices 11A, 11B, and 11C by the power of a battery.

As described above, the detection devices 11A, 11B, and 11C are made to operate by the power of the battery, so that the attitude information is output by data communication via wireless communication. Thus, in the work support system 1, the detection devices 11A, 11B, and 11C can be arranged without providing a power supply cable and a data communication cable, and can be applied to a desired work machine easily.

The body device 12 is provided in the main body 5 of the hydraulic shovel 2, acquires the attitude information from the detection devices 11A, 11B, and 11C, and transmits the attitude information, together with attitude information on the main body 5, by data communication via wireless communication, and also, receives and displays support information by data communication via wireless communication. Thus, the body device 12 is provided with a sensor unit 31, an arithmetic unit 32, a wireless communication unit 33, and a display unit 34.

The sensor unit 31 is configured to be the same as the sensor units 21 of the detection devices 11A, 11B, and 11C, and outputs the attitude information on the main body 5.

The wireless communication unit 33 transmits and receives various kinds of data to and from the detection devices 11A, 11B, and 11C and the portable information terminal device 4 by data communication via wireless communication.

The arithmetic unit 32 executes a control program related to the body device 12 of the work support system 1 by means of a built-in arithmetic processing circuit, thereby controlling the operation of each unit. Thus, in response to an instruction from the portable information terminal device 4, the arithmetic unit 32 processes a result of measurement by the sensor, which is output from the sensor unit 31 to acquire the attitude information on the main body 5, and also acquires the attitude information from the detection devices 11A, 11B, and 11C. Also, these pieces of attitude information are transmitted to the portable information terminal device 4 by data communication via wireless communication. Further, support information transmitted from the portable information terminal device 4 is received, and the support information is displayed on the display unit 34.

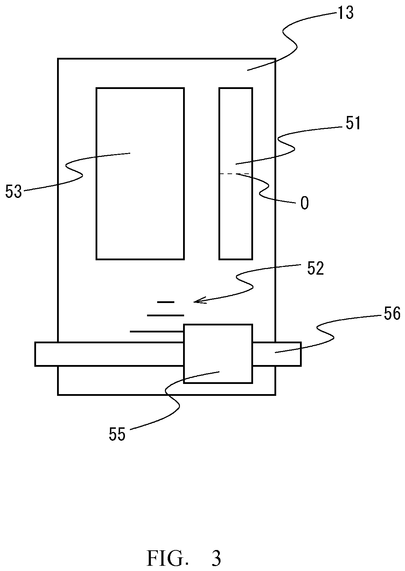

As illustrated by a plan view of Fig. 3, the light receiver 13 is a light-receiving device that is set on a scale and used at a work site, and is provided on the arm 7 by a holding mechanism 56. The light receiver 13 may be provided on the boom 6 instead of the arm 7. The light receiver 13 receives the laser light LA transmitted from the laser beacon 3 by a light-receiving unit 51 and notifies an operator of the hydraulic shovel 2 of the light reception. Here, in the light receiver 13, the light-receiving unit 51 is formed of a line sensor, and a display unit 53 is provided adjacent to the light-receiving unit 51. When the light receiver 13 receives the laser light LA at a point above a central position (hereinafter referred to as a light reception central position) O in a longitudinal direction of the light-receiving unit 51, the display unit 53 displays an arrow or the like instructing that the light receiver 13 should be moved upward. Conversely, when the light receiver 13 receives the laser light LA at a point below the light reception central position O of the light-receiving unit 51, the display unit 53 displays an arrow or the like instructing that the light receiver 13 should be moved downward. Further, when the laser light LA is received at the light reception central position O of the light-receiving unit 51, a display indicating that the light is received at the center is displayed on the display unit 53.

In addition, the light receiver 13 notifies the operator of the reception of the laser light LA by outputting a warning sound from an informing unit 52 in coordination with such displays of the display unit 53. However, when the operator is operating the hydraulic shovel 2 in a cockpit, it is guessed that there may also be a case where the operator does not notice the notification by the informing unit 52 due to the work noise of the surroundings and the sealability of a driver's seat. For this reason, the light receiver 13 is provided with a signal conversion device 55, and the signal conversion device 55 produces an emphasized sound by amplifying the warning sound given by the informing unit 52 and/or emphasized light coordinated with the warning sound given by the informing unit 52. By virtue of this feature, the light receiver 13 notifies the operator of the reception of the laser light LA by the emphasized sound and/or the emphasized light in such a way that he/she can recognize the reception of the laser light LA. Instead of a notification by a sound from the informing unit 52, a notification may be made by light. In this way, the signal conversion device 55 may emphasize the notification by the light so that the notification is converted into a notification by the emphasized light and/or the emphasized sound. By virtue of this feature, even in a case where the operator in the cockpit is unable to recognize the reception of the laser light by the light receiver, the operator can be made to recognize the reception by way of the conversion by the signal conversion device, and the reception of the laser light LA can be reliably notified.

The portable information terminal device 4 is the so-called smartphone or tablet terminal carried by an operator. The portable information terminal device 4 generates support information from the attitude information given by the detection devices 11A, 11B, and 11C that is obtained via the body device 12, and transmits the generated support information to the body device 12.

More specifically, the portable information terminal device 4 is provided with a display unit 41, an arithmetic unit 42, a wireless communication unit 43, and an operation unit 44.

Here, the display unit 41 is formed of an image display panel such as a liquid crystal display panel, and displays various kinds of image information related to the portable information terminal device 4. The operation unit 44 is a touch panel provided on the display unit 41 and receives an operation by an operator.

The wireless communication unit 43 transmits and receives, under the control of the arithmetic unit 42, various kinds of data to and from the body device 12 by data communication via wireless communication. Further, the wireless communication unit 43 is connected to a network and executes, for example, a version upgrade of a program related to processing of the work support system 1.

The arithmetic unit 42 acquires the attitude information from the body device 12 by executing the control program of the work support system 1 by means of a built-in arithmetic processing circuit, and also generates support information by processing the acquired attitude information and transmits the support information to the body device 12.

### [Support Information Generation Processing]

In response to an instruction from the operator detected by the operation unit 44, the arithmetic unit 42 detects a measurement reference location of the movable part from the attitude information with reference to a light reception position of the laser light LA obtained by the light receiver 13, and generates the support information (hereinafter referred to as setting processing (a setting step)). Further, after that, until the operator performs a setting operation, the support information is updated on the basis of the attitude information (hereinafter referred to as update processing (an update step)).

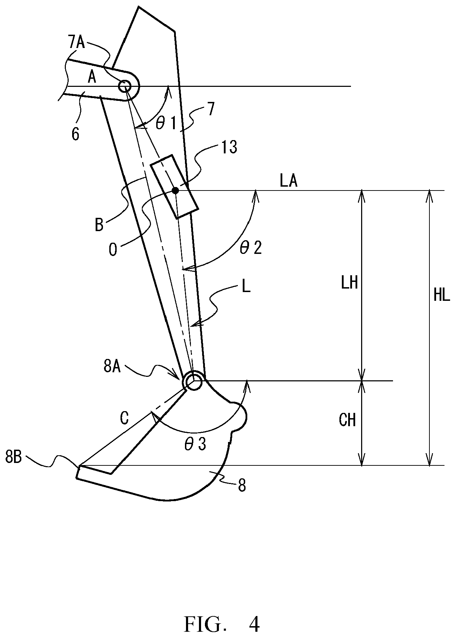

Fig. 4 is a diagram for use in describing the setting processing, and is a diagram showing an example of a case where the light receiver 13 is attached to the arm 7, which is the movable part. Here, it is assumed that an angle formed by a line segment connecting a rotation center of the arm pin 7A and a rotation center of the bucket pin 8A with respect to a plane perpendicular to the gravity direction (i.e., a work target surface in the present embodiment) is θ1, and an angle formed by a line segment connecting the light reception central position O of the light receiver 13 and the rotation center of the bucket pin 8A with respect to a plane perpendicular to the gravity direction is θ2. Further, it is assumed that a distance between the light reception central position O of the light receiver 13 and the rotation center of the bucket pin 8A in gravity direction cross section is L, an angle formed by a line segment between the rotation center of the bucket pin 8A and a bucket distal end 8B with respect to a plane perpendicular to the gravity direction is θ3, and a distance between the rotation center of the bucket pin 8A and the bucket distal end 8B in gravity direction cross section is C. Furthermore, it is assumed that a difference between angle θ1 and angle θ2 is Δθ12.

Here, when it is assumed that a distance between the light reception central position O of the light receiver 13 and the rotation center of the bucket pin 8A in the gravity direction is LH, the distance LH can be represented as L × sin(θ1+Δθ12). Further, when it is assumed that a distance between the rotation center of the bucket pin 8A and the bucket distal end 8B in the gravity direction is CH, the distance CH can be represented as C × sin(θ3). What the operator wishes to know at the work site is a distance HL to the bucket distal end 8B with respect to the light reception position of the laser light LA in the gravity direction, and the distance HL can be represented as LH + CH. Angles θ1 to θ3 can be acquired from the attitude information obtained from the detection devices 11A to 11C via the body device 12, and angle Δθ12 and the distances Land C can be set in advance at the time of introducing the work support system 1 to the hydraulic shovel 2.

By virtue of the above-described features, in the setting processing, after the arithmetic unit 42 instructs the operator to receive the laser light at the light reception central position O of the light receiver 13 by the display of the display unit 41, the arithmetic unit 42 detects, in response to an instruction from the operator detected by the operation unit 44, the distance HL by detecting the measurement reference location of the movable part (i.e., the distal end 8B of the bucket 8) from the attitude information with reference to the light reception position of the laser light LA obtained by the light receiver 13, and outputs the distance HL as the support information.

After the support information has been set by the setting processing as described above, with the assumption that the attitude of the main body 5 of the hydraulic shovel 2 has not been changed, it is possible to detect, from changes in the attitude information (an inclination of the boom 6, an inclination of the arm 7 (angle θ1), and an inclination of the bucket 8 (angle θ3)), an amount of change ΔHL in a vertical direction of the bucket distal end 8B by arithmetic processing using the length of the boom 6 (i.e., the length of the line segment connecting the rotation center of the boom pin 6A and the rotation center of the arm pin 7A), a length B of the line segment connecting the rotation center of the arm pin 7A and the rotation center of the bucket pin 8A, and a length C of the line segment connecting the rotation center of the bucket pin 8A and the bucket distal end 8B.

By virtue of this feature, the arithmetic unit 42 calculates the amount of change ΔHL from the attitude information and updates the support information in the update processing.

However, there may be a case where the attitude of the main body 5 is changed greatly due to traveling or the like. In this case, if the updating processing is simply repeated, it is difficult to correctly detect the position of the bucket distal end 8B. Hence, the arithmetic unit 42 executes the update processing until the operator gives an instruction again, and executes the setting processing once again when the operator gives such an instruction.

In response to an instruction from the operator as described above, by detecting the measurement reference location of the movable part from the attitude information with reference to the light reception position of the laser light to set the support information, and updating the support information on the basis of the attitude information, it is possible to effectively use a general-purpose laser beacon and a general-purpose light receiver that are used at work sites to check on the depth of an excavation place, unevenness of a leveled ground surface, and the like. Consequently, a work support system can be configured by effectively using general-purpose products used at work sites.

### [Laser Light Receiving Condition Specifying Processing]

Incidentally, in the setting processing, when the distal end 8B of the bucket 8 is greatly away from the main body 5 or on the contrary, when the distal end 8B of the bucket 8 is extremely close to the main body 5, the accuracy of detection of the distal end 8B of the bucket 8, which is detected by the attitude information, is lowered.

Thus, when the operator has selected laser light receiving condition specifying processing, the arithmetic unit 42 obtains laser light receiving conditions of the boom 6, the arm 7, and the bucket 8 which reduce an arithmetic error of the distal end 8B of the bucket 8. Then, after notifying the operator of the obtained laser light receiving conditions and instructing the operator to perform an operation for the laser light receiving conditions, the arithmetic unit 42 executes, in response to an instruction from the operator, the setting processing described above with respect to Fig. 4.

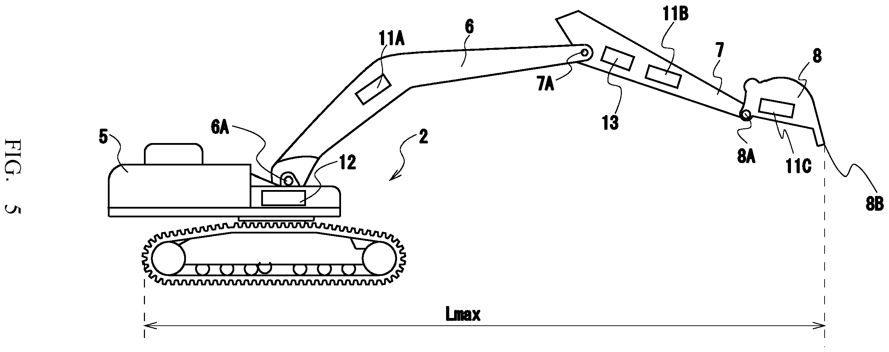

More specifically, as illustrated in Fig. 5, the arithmetic unit 42 instructs the operator by a display of the display unit 41 and/or by a voice such that the distal end 8B of the bucket 8 comes at a position of being most distant from the main body 5 in a horizontal direction, and acquires a horizontal distance Lmax to the distal end 8B of the bucket 8, which is the distance when the distal end 8B is most distant from the main body 5, in response to an instruction from the operator. Here, in the present embodiment, the distance Lmax is acquired with reference to a rear lower end part of a traveling portion of the main body 5.

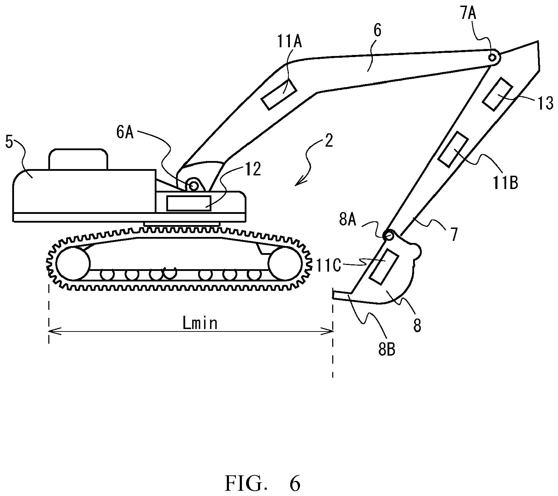

Further, after that, as illustrated in Fig. 6, the operator is similarly instructed such that the distal end 8B of the bucket 8 comes at a position of being closest to the main body 5 in the horizontal direction, and a horizontal distance Lmin to the distal end 8B of the bucket 8, which is the distance when the distal end 8B is closest to the main body 5, is acquired in response to an instruction from the operator. Here, the distance Lmin is likewise acquired with reference to the rear lower end part of the traveling portion of the main body 5.

Further, (Lmax + Lmin)/2), which indicates the distance corresponding to an average value of the distances Lmax and Lmin, is calculated, and an attitude at which the average value distance (Lmax + Lmin)/2) is satisfied is set as the laser light receiving condition. Thus, the arithmetic unit 42 instructs the operator to operate the hydraulic shovel 2 such that the average value distance (Lmax + Lmin)/2 represents the position of the distal end 8B of the bucket 8, and the laser light LA is received at the light reception central position O of the light receiver 13, and calculates the distance HL described with reference to Fig. 4 in response to an instruction from the operator.

In this case, whether or not the laser light receiving condition is satisfied may be determined by monitoring of the attitude information, and an instruction from the operator may be received. Further, for example, a range of a certain width with the average value distance (Lmax + Lmin)/2) taken as a median as represented by (Lmax + Lmin)/2) ± 5% may be set as the laser light receiving condition. Alternatively, instead of using these values, a median of a range of the highest frequency of use may be set as the laser light receiving condition.

Even in a case where the arithmetic unit 42 sets the support information in accordance with the laser light receiving condition as described above, when the attitude of the main body 5 is changed greatly due to traveling or the like, the accuracy of the support information updated by the update processing is lowered. Thus, even in a case where the support information is set in accordance with the laser light receiving condition as described above, the update processing is executed until the operator gives an instruction again, and the setting processing is executed once again when the operator gives such an instruction. In this case, the processing of calculating the distances Lmax and Lmin is omitted, and the support information is set in receiving an instruction from the operator according to the laser light receiving condition that has been calculated previously.

As described above, an intermediate position between a position at which the distal end 8B of the bucket 8 becomes most distant from the main body 5 and a position at which the distal end 8B of the bucket 8 becomes closest to the main body 5 is set as the laser light receiving condition, and the operator is notified of the set laser light receiving condition. By doing so, after making the setting to reduce a detection error of the bucket distal end, the measurement reference location can be detected to set the support information, and the accuracy of the support information can thereby be improved.

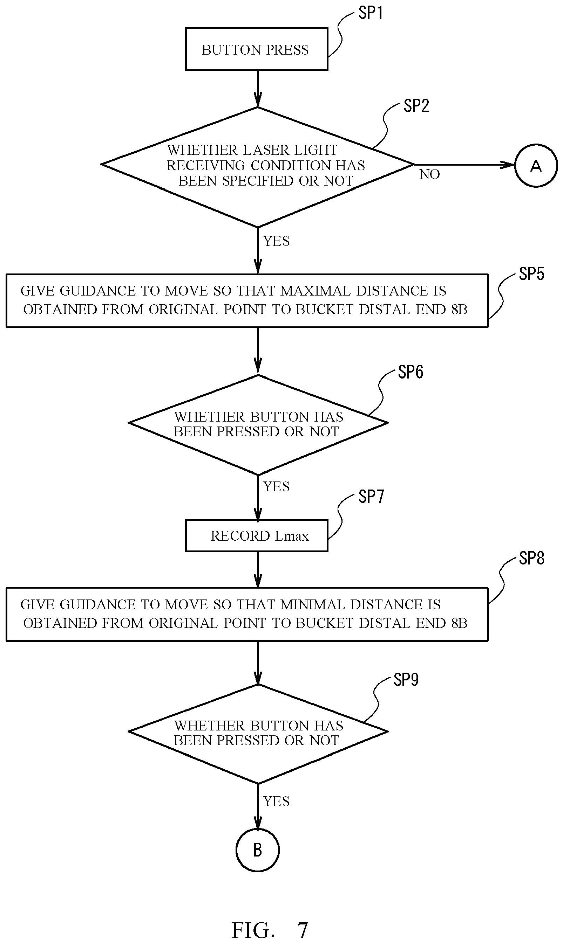

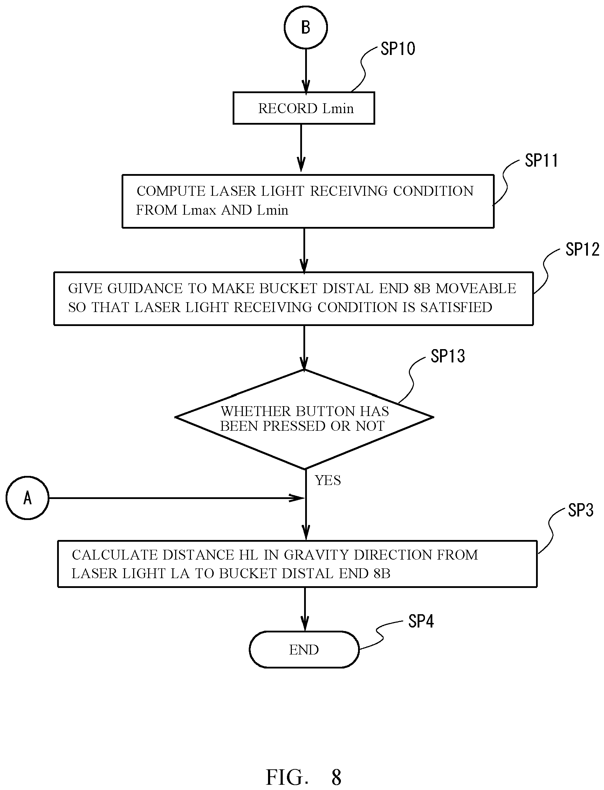

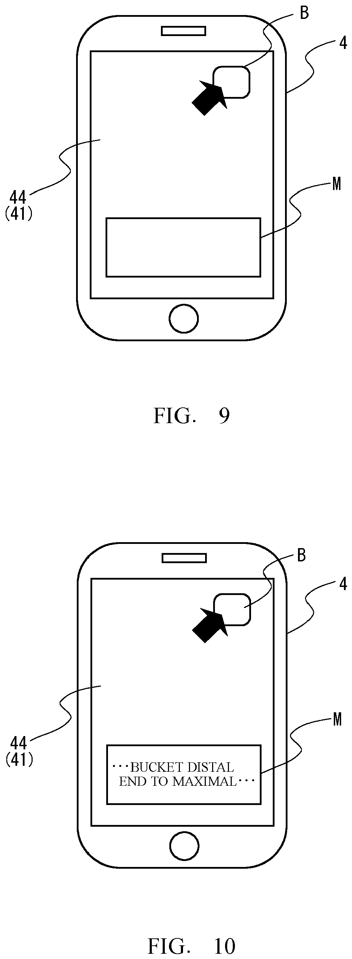

Figs. 7 and 8 are flowcharts for use in describing the setting processing. When the control program of the work support system 1 is started, the arithmetic unit 42 displays a guidance screen illustrated in Fig. 9 on the display unit 41. Here, a message window M is displayed at the lower part of the guidance screen, and a message indicating that setting processing for the support information is in process is displayed in the message window M. Further, an operation button B is displayed at an upper right end portion.

When the operation button B is selected on the guidance screen (step SP1), the arithmetic unit 42 switches the display of the guidance screen, displays a selection screen for selection of whether or not the laser light receiving condition is to be specified, and receives the selection by the operator (step SP2). Here, when the operator selects a button indicating that the laser light receiving condition is not to be specified, the arithmetic unit 42 instructs the operator to operate the hydraulic shovel 2 such that the laser light LA is received at the light reception central position O of the light receiver 13 by a display of the message window M, and waits for the button B to be operated. When the operator operates the hydraulic shovel 2 such that the laser light LA is received at the light reception central position O of the light receiver 13 in response to this message and operates the button B, the distance HL is detected as described above with respect to Fig. 4 to generate support information, and the support information is transmitted to the body device 12 to be displayed (step SP3), and then, the display screen is switched to the initial display and the setting processing is ended (step SP4). Then, the arithmetic unit 42 thereafter executes the update processing and updates the support information, which has been set by the setting processing, on the basis of the attitude information. Further, when the operator operates the button B again, the setting processing for the support information is repeated.

Meanwhile, when the operator selects specification of the laser light receiving condition, the arithmetic unit 42 switches the display of the guidance screen, as illustrated in Fig. 10, and instructs the operator to operate the hydraulic shovel 2 such that the distal end of the bucket comes at a position of being most distant from the main body via the message window M, and then waits for the button B to be operated (step SP5). In response to this message, when the operator operates the hydraulic shovel 2 such that the distal end of the bucket comes at a position of being most distant from the main body and then operates the button B, the length Lmax is detected and recorded (steps SP6 to SP7).

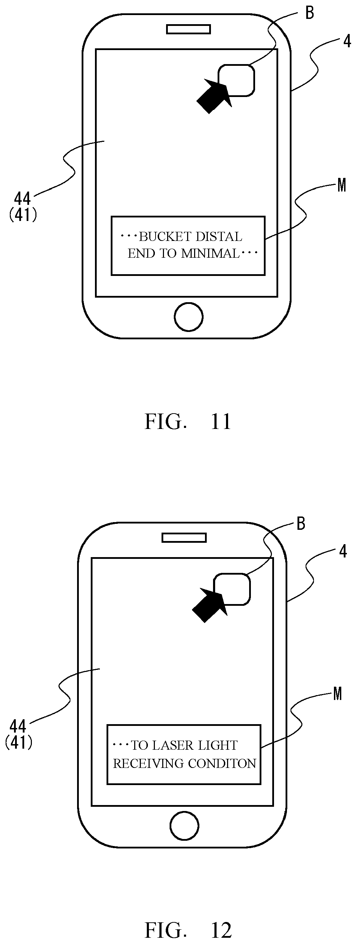

Next, as illustrated in Fig. 11, the display of the guidance screen is switched, and the operator is instructed to operate the hydraulic shovel 2 such that the distal end of the bucket comes at a position of being closest to the main body via the message window M, and then, an operation of the button B is waited for (step SP8). In response to this message, when the operator operates the hydraulic shovel 2 such that the distal end of the bucket comes at a position of being closest to the main body and then operates the button B, the length Lmin is detected and recorded (steps SP9 to SP10).

Next, the arithmetic unit 42 calculates the average value distance (Lmax + Lmin)/2 from the recorded distances Lmax and Lmin to compute the laser light receiving condition (step SP11). Further, as illustrated in Fig. 12, the display of the guidance screen is switched, and the operator is instructed to operate the hydraulic shovel 2 such that the laser light receiving condition is satisfied and the laser light LA is received at the light reception central position O of the light receiver 13 via the message window M, and then, an operation of the button B is waited for (step SP12).

When the operator operates the hydraulic shovel 2 in response to this message and operates the button B, the distance HL is detected as described above with respect to Fig. 4 to generate support information, and the support information is transmitted to the body device 12 to be displayed (step SP3), and then, the display screen is switched to the initial display and the setting processing is ended (step SP4). Then, the arithmetic unit 42 thereafter executes the update processing and updates the support information, which has been set by the setting processing, on the basis of the attitude information. Also in this case, when the operator operates the button B again, the setting processing for the support information is repeated.

According to the above configuration, in response to an instruction from an operator, by detecting a measurement reference location of a movable part from attitude information with reference to a light reception position of laser light to set support information, and updating the support information on the basis of the attitude information, it is possible to effectively use a general-purpose laser beacon and a general-purpose light receiver that are used at a work site to check on the depth of an excavation place, unevenness of a leveled ground surface, and the like, and perform the work. Consequently, a work support system can be configured by effectively using general-purpose products used at work sites.

Further, on the basis of the attitude information, an intermediate position between a position at which a distal end of a bucket becomes most distant from a main body and a position at which the distal end of the bucket becomes closest to the main body is set as a laser light receiving condition, and the operator is notified of the set laser light receiving condition. By doing so, after making the setting to reduce a detection error of the bucket distal end, the measurement reference location can be detected to set the support information, and the accuracy of the support information can thereby be improved.

Furthermore, by virtue of providing a signal conversion device, which converts a notification to an operator such that the notification can be recognized by an operator in a cockpit of a work machine, even in a case where the operator in the cockpit is unable to recognize reception of the laser light by the light receiver, the operator can be made to recognize the reception by way of the conversion by the signal conversion device.

### [Other Embodiments]

While specific configurations suitable for the implementation of the present invention have been described in detail above, the configuration of the embodiment described above can be changed variously without departing from the spirit of the present invention.

That is, in the embodiment described above, the case in which an instruction from the operator is detected by detection of an operation of the button B, which is detected by the operation unit 44, has been described. However, the present invention is not limited to the above, and an instruction from the operator may be detected by a voice input.

### DESCRIPTION OF REFERENCE NUMERALS

1 Work support system
2 Hydraulic shovel
3 Laser beacon
4 Portable information terminal device
5 Main body
6 Boom
6A Boom pin
7 Arm
7AArm pin
8 Bucket
8A Bucket pin
8B Bucket distal end
11A, 11B, 11C Detection device
12 Body device
13 Light receiver
21, 31 Sensor unit
22, 32, 42 Arithmetic unit
23, 33, 43 Wireless communication unit
24 Power supply
34, 41, 53 Display unit
44 Operation unit
51 Light-receiving unit
52 Informing unit
55 Signal conversion device
56 Holding mechanism

## Claims

1. A work support system which supports an operation of an operator who operates a work machine, the work support system comprising:
a laser beacon which emits laser light to perform scanning; and
a portable information terminal device,
the work machine comprising:
a detection device which is held on a movable part of the work machine, and acquires attitude information on the movable part by means of a sensor and outputs the attitude information;
a body device which acquires the attitude information from the detection device and transmits the attitude information by data communication via wireless communication, and also receives and displays support information for supporting the operation of the operator by data communication via the wireless communication; and
a light receiver which is held on the movable part, and receives the laser light and notifies the operator, wherein
the portable information terminal device:
detects, in response to an instruction from the operator, a measurement reference location of the movable part from the attitude information with reference to a light reception position of the laser light obtained by the light receiver to set the support information; and
updates the support information based on the attitude information.

2. The work support system according to claim 1, wherein:
the work machine is a hydraulic shovel; and
the measurement reference location is a distal end of a bucket of the hydraulic shovel.

3. The work support system according to claim 2, wherein
the portable information terminal device sets, based on the attitude information, an intermediate position between a position at which the distal end of the bucket becomes most distant from a main body and a position at which the distal end of the bucket becomes closest to the main body as a laser light receiving condition, and notifies the operator of the laser light receiving condition.

4. The work support system according to any one of claims 1 to 3, wherein
the light receiver comprises a signal conversion device which converts a notification to the operator such that the notification is recognizable by the operator in a cockpit of the work machine.

5. A control method for a work support system for supporting an operation of an operator who operates a work machine, in which the work support system comprises:
a laser beacon which emits laser light to perform scanning; and
a portable information terminal device, and
the work machine comprises:
a detection device which is held on a movable part of the work machine, and acquires attitude information on the movable part by means of a sensor and outputs the attitude information;
a body device which acquires the attitude information from the detection device and transmits the attitude information by data communication via wireless communication, and also receives and displays support information for supporting the operation of the operator by data communication via the wireless communication; and
a light receiver which is held on the movable part, and receives the laser light and notifies the operator,
the control method comprising, in the portable information terminal device:
detecting, in response to an instruction from the operator, a measurement reference location of the movable part from the attitude information with reference to a light reception position of the laser light obtained by the light receiver and setting the support information; and
updating the support information based on the attitude information.

6. A control program for a work support system for causing a predetermined processing procedure to be executed by execution of the control program by an arithmetic processing circuit, in which the work support system comprises:
a laser beacon which emits laser light to perform scanning; and
a portable information terminal device, and
the work machine comprises:
a detection device which is held on a movable part of the work machine, and acquires attitude information on the movable part by means of a sensor and outputs the attitude information;
a body device which acquires the attitude information from the detection device and transmits the attitude information by data communication via wireless communication, and also receives and displays support information for supporting the operation of the operator by data communication via the wireless communication; and
a light receiver which is held on the movable part, and receives the laser light and notifies the operator,
the predetermined processing procedure comprising:
a setting step of setting the support information by detecting, in response to an instruction from the operator, a measurement reference location of the movable part from the attitude information with reference to a light reception position of the laser light obtained by the light receiver; and
an updating step of updating the support information based on the attitude information.
